Europäisches Patentamt

European Patent Office

Office européen des brevets

(11) Veröffentlichungsnummer: **0 087 405**
**B1**

(12) **EUROPÄISCHE PATENTSCHRIFT**

(45) Veröffentlichungstag der Patentschrift:
04.09.85

(21) Anmeldenummer: **83890002.5**

(22) Anmeldetag: **10.01.83**

(51) Int. Cl.⁴: **C 22 B 4/00**

(54) Verfahren und Einrichtung zur Reduktion von oxidhältigen feinteiligen Erzen.

(30) Priorität: **19.01.82 AT 167/82**

(43) Veröffentlichungstag der Anmeldung:
**31.08.83 Patentblatt 83/35**

(45) Bekanntmachung des Hinweises auf die Patenterteilung:
**04.09.85 Patentblatt 85/36**

(84) Benannte Vertragsstaaten:
**BE DE FR GB IT NL SE**

(56) Entgegenhaltungen:
**EP - A - 0 037 809**
**AT - B - 257 964**
**AU - B - 506 624**
**DE - A - 2 650 324**
**US - A - 1 847 527**

(73) Patentinhaber: **VOEST-ALPINE Aktiengesellschaft,**
**Werksgelände, A-4010 Linz (AT)**

(72) Erfinder: **Lugscheider, Walter, Dipl.-Ing. Dr.,**
**Biesenfeldweg 2, A-4045 Linz (AT)**
Erfinder: **Leutgöb, Alois, Dipl.-Ing. Dr., Dieselstrasse 11,**
**A-4400 Steyr (AT)**
Erfinder: **Riegler, Ernst, Grollerstrasse 5, A-4470 Enns**
**(AT)**
Erfinder: **Müllner, Paul, Walzwerksstrasse 19,**
**A-4050 Traun (AT)**

(74) Vertreter: **Wolfram, Gustav, Dipl.-Ing.,**
**Schwindgasse 7 P.O. Box 205, A-1041 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur Reduktion von oxidhältigen feinteiligen Erzen, wobei die oxidhältigen Erzpartikel in Gegenwart fester, flüssiger oder gasförmiger Kohlenstoffträger unter der Einwirkung eines Plasmastrahles eines Plasmabrenners in einem rotationssymmetrischen Schmelzgefäss aufgeschmolzen und reduziert werden, sowie eine Einrichtung zur Durchführung des Verfahrens.

Aus der AT-PS Nr. 257964 ist ein Verfahren zum Reduzieren metallischer Oxide mittels eines Lichtbogenplasmas bekannt. Das Lichtbogenplasma enthält ein Kohlenwasserstoffgas, das in erster Linie als Reduktionsgas dient. Der Plasmabogen ist zwischen einem im Deckel vertikal angeordneten Plasmabrenner und einer im Boden eines Schmelzgefässes angeordneten Bodenelektrode gezündet. Die sich bildende Metallschmelze ist von einer Schlackenschicht bedeckt. Die Reduktion der Metalloxide findet in der Schlackenschicht statt. Ein Kontakt des Kohlenstoffes und/oder Wasserstoffes mit dem flüssigen Metallbad muss bei diesem Verfahren verhindert werden, da andernfalls die Gefahr besteht, dass Kohlenstoff in Lösung geht und es dadurch zu einem unerwünschten Kohlenstoffanstieg kommt. Weiters würde die Gefahr bestehen, dass Wasserstoff in die Metallschmelze eindiffundiert.

Dieses bekannte Verfahren weist den Nachteil auf, dass die vom Lichtbogenplasma ausgehende Wärmeenergie eine grosse Belastung für die feuerfeste Auskleidung des Schmelzgefässes darstellt, da die stärkste Wärmestrahlung senkrecht zur Achse des Plasmastrahles auftritt. Dadurch bedingt ist die Lebensdauer der Auskleidung des Schmelzgefässes relativ kurz. Weiters muss stets für eine ausreichend dicke Schlackenschicht gesorgt werden, da die Reduktion in der Schlackenschicht bzw. an deren Oberfläche stattfinden muss. Reduktionsgase dürfen nicht zum Metallbad gelangen.

Aus der EP-A1 Nr. 0037809 ist ein Verfahren zur Herstellung von flüssigem Roheisen bekannt, bei dem vorreduzierte oxidhältige Rohstoffpartikel in ein aus Kohlenteilchen und einem sauerstoffhältigen Trägergas gebildetes Wirbelbett von oben durch den Deckel des Schmelzgefässes eingebracht und bei Durchwandern desselben erhitzt, fertigreduziert und aufgeschmolzen werden, wobei dem Wirbelbett durch eine Stützfeuerung, die als Plasmaheizung ausgebildet ist, zusätzliche Energie' zugeführt wird. Bei diesem bekannten Verfahren ist es notwendig, ein stark vorreduziertes (auf etwa 60 bis 80% vorreduziertes) Erz einzusetzen. In dem Schmelzgefäss wird dieses vorreduzierte Erz lediglich einer Nachreduktion unterzogen.

Die Erfindung stellt sich die Aufgabe, ein Verfahren sowie eine Einrichtung zur Durchführung des Verfahrens zu schaffen, welche es ermöglichen, in einem einzigen Schritt in einem einzigen Schmelzgefäss vom Erz bis zum flüssigen Metall zu gelangen. Insbesondere sollen dabei Metalle mit niedrigen Kohlenstoffgehalten erhalten werden. Weiters soll das Schmelzgefäss, insbesondere dessen Ausmauerung, trotz hoher Energiebelastung eine lange Lebensdauer aufweisen, und es soll die zugeführte Energie optimal ausgenützt werden.

Diese Aufgabe wird erfindungsgemäss dadurch gelöst, dass mindestens ein Teil der zu reduzierenden oxidhältigen Erzpartikel durch Chargieröffnungen in der Seitenwand des Gefässes eingeführt und in eine zyklonische Rotationsbewegung versetzt werden und dass der Plasmastrahl des Plasmabrenners innerhalb, vorzugsweise im Zentrum des rotierenden Partikelstroms erzeugt wird.

Eine Einrichtung zur Durchführung des Verfahrens mit einem feuerfest ausgekleideten, einen rotationssymmetrischen Innenraum aufweisenden Schmelzgefäss, welches Chargieröffnungen für die Zugabe von oxidhältigen Erzpartikeln sowie für Zuschlagsstoffe und Öffnungen für feste, flüssige oder gasförmige Kohlenstoffträger und andere Zuschlagsstoffe enthält, sowie mit einem oder mehreren Plasmabrennern ist dadurch gekennzeichnet, dass in der Seitenwand des Schmelzgefässes Chargierlanzen angeordnet sind, die in den Raum zwischen der Seitenwand des Schmelzgefässes und dessen zentraler Achse gerichtet sind.

Um eine längere Verweilzeit der Erzpartikel oberhalb des sich bildenden Metallsumpfes zu erzielen, sind die Chargierlanzen vorzugsweise zusätzlich schräg nach oben gerichtet.

Um den Reduktionsprozess gut steuern und dem jeweiligen Erz anpassen zu können, sind die Chargierlanzen vorzugsweise kardanisch gelagert.

Zur Zuführung von Reduktionsgas und/oder Sauerstoff sind vorzugsweise in der Seitenwand des Gefässes zusätzliche Lanzen angeordnet, die schräg nach unten gegen die Oberfläche des entstehenden Metallsumpfes gerichtet sind.

Die beste Ausnützung der Energie des Plasmastrahles des Plasmabrenners ist dann gegeben, wenn der Plasmabrenner in der zentralen Achse des Schmelzgefässes angeordnet ist und mit einer Bodenelektrode zusammenarbeitet.

Zweckmässig sind die Chargierlanzen als Manteldüsen ausgebildet, wobei der Innenraum jeder Manteldüse zur Zuführung von Erzpartikeln und der den Innenraum umgebende Ringraum jeder Manteldüse zur Zuführung von Reduktionsgas bestimmt ist.

Für eine Chargierung beim Anfahren des Reduktionsprozesses sind im Deckel des Schmelzgefässes zusätzlich mehrere Chargieröffnungen in Form eines seitenwandnahen Ringes angeordnet.

Die Erfindung ist nachfolgend anhand der Zeichnungen näher erläutert, wobei

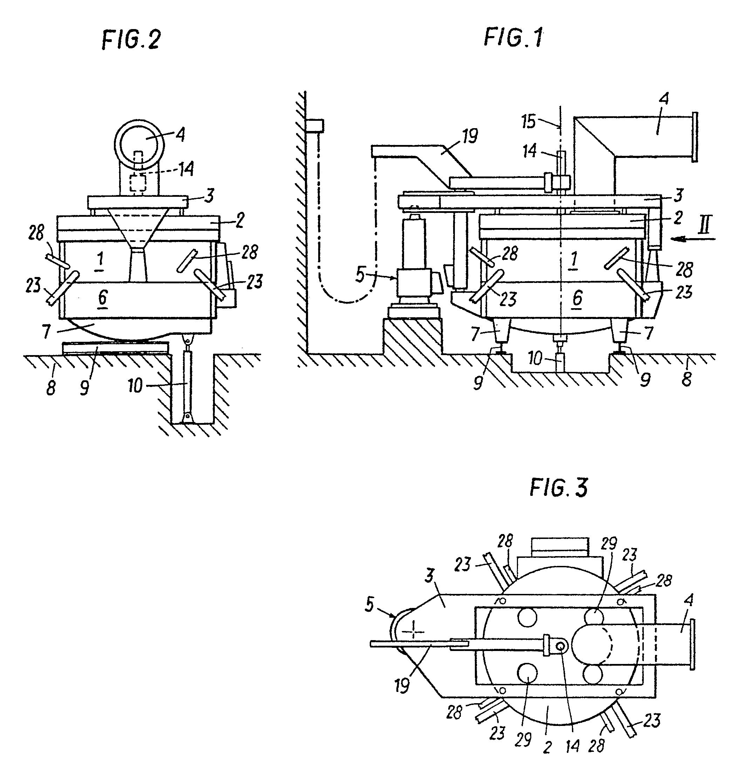

Fig. 1 einen Plasmaofen in Seitenansicht,

Fig. 2 in Ansicht des Pfeiles II der Fig. 1 und

Fig. 3 seinen Grundriss in schematischer Darstellung zeigen.

Fig. 4 ist ein Schnitt gemäss der Linie IV-IV der Fig. 5,

Fig. 5 ein Schnitt gemäss der Linie V-V der Fig. 4.

Fig. 6 veranschaulicht eine Chargierlanze im Schnitt gemäss der Linie VI-VI der Fig. 5.

Ein Ofenoberteil 1 eines als Plasmaschmelzofen ausgebildeten Schmelzgefässes ist mit einem Deckel 2, der von einem Deckeltragwerk 3 getragen ist, versehen. Von dem Deckel aus ragt ein Rauchgaskrümmer 4 zu einer nicht dargestellten Absaugung. Seitlich neben dem Ofenoberteil 1 ist das Deckelhubwerk und das Deckelschwenkwerk 5 angeordnet. Der Ofenunterteil 6 ruht mit Wiegebalken 7 auf am Fundament 8 abgestützten Laufbahnen 9. Der hydraulische Antrieb für das Kippen des Plasmaschmelzofens ist mit 10 bezeichnet. Wie aus Fig. 5 ersichtlich, ist die mit einer feuerfesten Auskleidung 11 versehene Seitenwand 12 des Plasmaschmelzofens rotationssymmetrisch ausgebildet.

Ein durch den Deckel 2 in den rotationssymmetrischen Innenraum 13 ragender Plasmabrenner 14 fällt mit seiner Achse in die Achse 15 des Innenraumes 13. Sein Plasmastrahl 16 ist zu einer wassergekühlten Bodenelektrode 17, die ebenfalls in der zentralen Achse 15 des Schmelzgefässes angeordnet ist, gezündet.

Durch den für unterschiedliche Einsatzmengen höhenverstellbaren Plasmabrenner 14 hindurch wird Plasmagas 18, vorzugsweise Argon, dem Plasmastrahl 16 zugeführt. Die Zuleitung von Energie, Inertgas und Kühlwasser zu dem Plasmabrenner 14 erfolgt über einen Ausleger 19 am Deckel 2.

Der sich am Boden 20 des Plasmaschmelzofens sammelnde flüssige Metallsumpf 21 ist von einer Schlackenschicht 22 bedeckt. In der Seitenwand 12 des Plasmaschmelzofens sind Chargierlanzen 23 angeordnet, die zweckmässig kardanisch aufgehängt sind, sodass sich ihre Achsen 24 entsprechend den Betriebsbedingungen im Ofen ausrichten lassen. Die zu den Chargierlanzen 23 führenden Versorgungsleitungen sind in der Zeichnung nicht dargestellt.

Die gleichmässig in der Seitenwand 12 des Ofens verteilt angeordneten Chargierlanzen 23 sind, wie in Fig. 5 dargestellt, in den Raumzwischen der Seitenwand 12 des Ofens und dessen zentraler Achse 15 gleichsinnig gerichtet, sodass das durch die Chargierlanzen chargierte Gut 25 (feinteilige Erze) in eine zyklonische Rotationsbewegung versetzt wird. Im Zentrum dieser Rotationsbewegung liegt der Plasmastrahl 16.

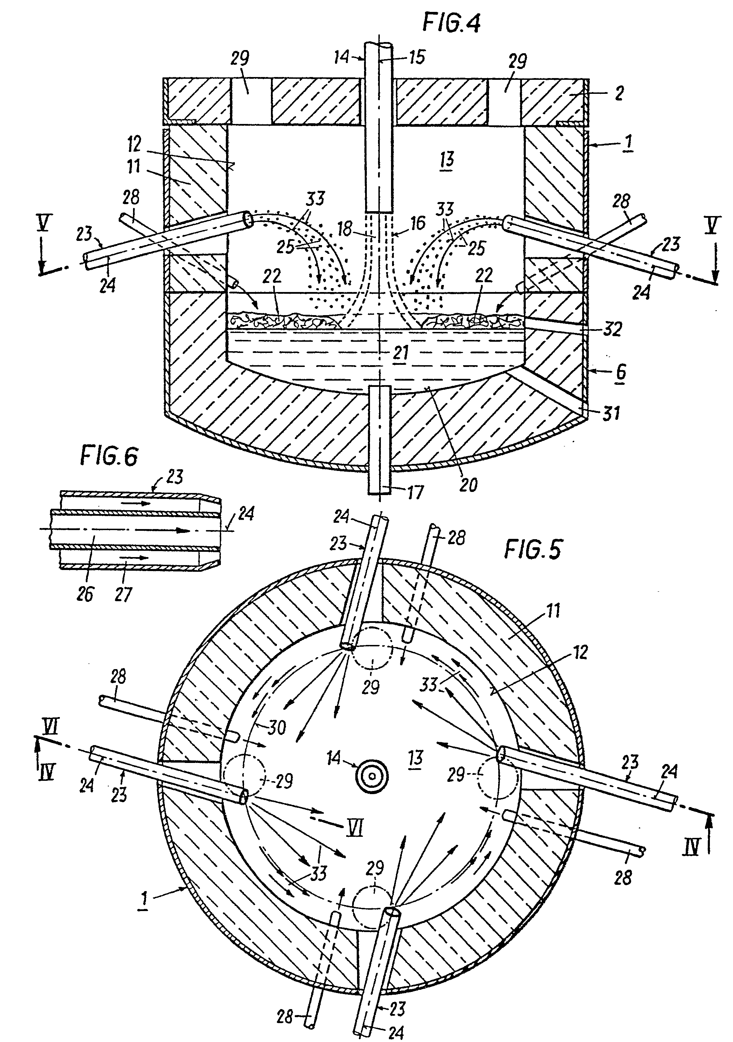

Aus Fig. 4 ist ersichtlich, dass die Chargierlanzen 23 zusätzlich schräg nach oben gerichtet sind.

Die Chargierlanzen 23 sind als Manteldüsen ausgebildet, wobei ihr zentraler Innenraum 26 zur Zuführung von Erzpartikeln und der den Innenraum 26 umgebende Ringraum 27 zur Zuführung von Reduktionsgas bestimmt ist.

In der Seitenwand 12 des Ofens sind weitere Lanzen 28 zur Zuführung von Reduktionsgas und/oder Sauerstoff angeordnet, die schräg nach unten gegen die Obefläche des Metallsumpfes 21 bzw. die Schlackenschicht 22 gerichtet sind.

Im Deckel 2 des Ofens sind weitere Chargieröffnungen 29 vorgesehen, die entlang eines Ringes 30 angeordnet sind, in dessen Zentrum der Plasmabrenner 14 liegt, wobei diese zusätzlichen Chargieröffnungen 29 nahe an der Seitenwand 12 des Ofens liegen. In der Nähe des Bodens 20 des Ofens ist ein Metallabstichloch 31 angeordnet. Oberhalb desselben ist ein Schlackenabstichloch 32 vorgesehen.

Die Funktion des erfindungsgemässen Plasmaschmelzofens ist folgende:

Nach der ersten Chargierung mit festem oder flüssigem Einsatz durch die Chargieröffnungen 29 wird der Plasmabrenner gezündet und der Feststoffanteil aufgeschmolzen.

Durch die am Umfang des Ofens angeordneten Chargierlanzen 23 werden sodann Feinerze, Erzstäube, Kohle, Kohlenstaub und/oder getrockneter Gichtgas-Waschschlamm sowie andere zu reduzierende Feststoffe zusammen mit Reduktionsgas, vorzugsweise Kohlenwasserstoffe, eingedüst. Wird neben Erz auch Kohle (Kohlenstaub) eingedüst, so wird diese(r) im Ofenraum zu CO vergast, das ebenfalls als Reduktionsgas wirkt. Die Lanzen 28 dienen dazu, um gewünschtenfalls zusätzlich Reduktionsgase und/oder Sauerstoff in den Innenraum 13 einzublasen.

Dadurch, dass die chargierten Feststoffe eine zyklonische Rotationsbewegung, die in Fig. 5 durch die Pfeile 33 veranschaulicht ist, entlang der Seitenwand 12 des Schmelzgefässes um den Plasmastrahl 16 herum durchführen, bilden die chargierten Feststoffpartikel einerseits einen Schutzmantel für die feuerfeste Auskleidung 11 des Ofens, und andererseits kommt es zu einer innigen Durchmischung der Erzpartikel mit dem Reduktionsgas.

Durch die hohe Wärmeenergie, die senkrecht zum Plasmastrahl 16 abgstrahlt wird, werden die Feststoffpartikel bereits im Innenraum 13 vor einem Kontakt mit dem flüssigen Metallsumpf 21 weitgehend aufgeschmolzen und gleichzeitig — aufgrund der reduzierenden Atmosphäre (durch eingedüste Reduktionsgase) — reduziert. Durch die hohe Wärmeenergie senkrecht zur Achse des Plasmastrahls 16 ergibt sich eine rasche Zerfallsreaktion der Kohlenwasserstoffe in reduzierende Bestandteile (z. B. C, $H_2$).

Das aufgeschmolzene Metall fällt durch die Schlackenschicht 22, wo es weiter reduziert werden kann, in den flüssigen Metallsumpf 21.

Durch dosiertes Einblasen von Reduktionsgas und/oder Sauerstoff durch die Lanzen 28 wird eine optimale Reduktion (höchstmögliche Ausbringung von reduziertem Metall) des Erzes bzw. der Erzstäube unter Minimierung der Elektroenergie des Plasmabrenners 14 erreicht. Diese Minimierung kann vor allem dadurch erzielt werden, dass zusätzliche Wärme zur Plasmawärme durch die Verbrennung von z. B. Kohlenstoff mit Sauerstoff erzeugt wird.

Die kontinuierliche Chargierung während des Ofenbetriebs beschränkt sich nicht nur auf das Chargieren durch die seitlich angebrachten Chargierlanzen 23, sondern kann erforderlichenfalls auch durch die Chargieröffnungen 29 im Deckel 2 des Plasmaschmelzofens erfolgen.

Durch getrennte Zufuhr von Plasmagas und Reduktionsgas können beide Gasströme entsprechend der gewünschten Bogenlänge (bei voller elektrischer Leistung) – in Abhängigkeit vom Stück-Staubgutverhältnis des Erzangebots einerseits sowie dem zu reduzierenden Einsatz andererseits – geregelt werden, ohne sich gegenseitig zu beeinflussen.

Ein besonderer Vorteil des erfindungsgemässen Verfahrens liegt in der Möglichkeit, Ferrolegierungen (FeCr, FeMn, FeSi) mit niedrigen Kohlenstoffgehalten (infolge geringer Aufkohlung beim Betrieb mit Plasmaenergie) wirtschaftlich in einem einzigen Verfahrenschritt vom Erz zum Flüssigmetall herzustellen.

Gemäss den bekannten Verfahren sind dazu mehrere Verfahrensschritte, wie Einschmelzen und nachfolgende Entkohlung in AOD-Konvertern, notwendig.

## Patentansprüche

1. Verfahren zur Reduktion von oxidhältigen feinteiligen Erzen (25), wobei die oxidhältigen Erzpartikel in Gegenwart fester, flüssiger oder gasförmiger Kohlenstoffträger unter der Einwirkung eines Plasmastrahles (16) eines Plasmabrenners (14) in einem rotationssymmetrischen Schmelzgefäss (1, 2, 6) aufgeschmolzen und reduziert werden, dadurch gekennzeichnet, dass mindestens ein Teil der zu reduzierenden oxidhältigen Erzpartikel durch Chargieröffnungen (23) in der Seitenwand (12) des Gefässes eingeführt und in eine zyklonisch Rotationsbewegung versetzt werden und dass der Plasmastrahl (16) des Plasmabrenners (14) innerhalb, vorzugsweise im Zentrum des rotierenden Partikelstroms erzeugt wird.

2. Einrichtung zur Durchführung des Verfahrens nach Anspruch 1, mit einem feuerfest ausgekleideten, einen rotationssymmetrischen Innenraum (13) aufweisenden Schmelzgefäss (1, 2, 6), welches Chargieröffnungen (23) für die Zugabe von oxidhältigen Erzpartikeln sowie für Zuschlagsstoffe und Öffnungen für feste, flüssige oder gasförmige Kohlenstoffträger und andere Zuschlagsstoffe enthält, sowie mit einem oder mehreren Plasmabrennern (14), dadurch gekennzeichnet, dass in der Seitenwand (12) des Schmelzgefässes (1, 2, 6) Chargierlanzen (23) angeordnet sind, die in den Raum zwischen der Seitenwand (12) des Schmelzgefässes und dessen zentraler Achse (15) gerichtet sind.

3. Einrichtung nach Anspruch 2, dadurch gekennzeichnet, dass die Chargierlanzen (23) zusätzlich schräg nach oben gerichtet sind.

4. Einrichtung nach den Ansprüchen 2 oder 3, dadurch gekennzeichnet, dass die Chargierlanzen (23) kardanisch gelagert sind.

5. Einrichtung nach einem der Ansprüche 2 bis 4, dadurch gekennzeichnet, dass in der Seitenwand (12) des Schmelzgefässes (1, 2, 6) zusätzlich Lanzen (28) zur Zuführung von Reduktionsgas und/oder Sauerstoff angeordnet sind, die schräg nach unten gegen die Oberfläche des entstehenden Metallsumpfes (21) gerichtet sind.

6. Einrichtung nach einem der Ansprüche 2 bis 5, dadurch gekennzeichnet, dass in der zentralen Achse (15) des Schmelzgefässes (1, 2, 6) ein Plasmabrenner (14) angeordnet ist, der mit einer Bodenelektrode (17) zusammenarbeitet.

7. Einrichtung nach einem der Ansprüche 2 bis 6, dadurch gekennzeichnet, dass die Chargierlanzen (23) als Manteldüsen ausgebildet sind, wobei der Innenraum (26) jeder Manteldüse zur Zuführung von Erzpartikeln (25) und der den Innenraum (26) umgebende Ringraum (27) jeder Manteldüse zur Zuführung von Reduktionsgas bestimmt ist.

8. Einrichtung nach einem der Ansprüche 2 bis 7, dadurch gekennzeichnet, dass im Deckel (2) des Schmelzgefässes zusätzlich mehrere Chargieröffnungen (29) entlang eines seitenwandnahen Ringes (30) angeordnet sind.

## Claims

1. A method for reducing oxide-containing fine-particle ores (25), wherein the oxide-containing ore particles are melted and reduced in a rotationally symmetric melting vessel (1, 2, 6) in the presence of solid, liquid or gaseous carbon carriers upon the action of a plasma jet (16) of a plasma burner (14), characterised in that at least a part of the oxide-containing ore particles to be reduced is introduced through charging openings (23) provided in the side wall (12) of the vessel and is set in a cyclonic rotational movement, and that the plasma jet (16) of the plasma burner (14) is generated within, preferably in the centre of, the rotating particle flow.

2. An arrangement for carrying out the method according to Claim 1, comprising a refractorily lined melting vessel (1, 2, 6) having a rotationally symmetric interior (13) and including charging openings (23) for the addition of oxide-containing ore particles as well as for fluxes and openings for solid, liquid or gaseous carbon carriers and other fluxes, as well as one or more plasma burners (14), characterised in that charging lances (23) are arranged in the side wall (12) of the melting vessel (1, 2, 6), which are directed into the space between the side wall (12) of the melting vessel and its central axis (15).

3. An arrangement according to Claim 2, characterised in that the charging lances (23) additionally are directed obliquely upwards.

4. An arrangement according to Claim 2 or 3, characterised in that the charging lances (23) are cardanically mounted.

5. An arrangement according to any of Claims 2 to 4, characterised in that lances (28) for supplying reduction gas and/or oxygen are additionally arranged in the side wall (12) of the melting vessel (1, 2, 6), which are directed obliquely downwardly towards the surface of the metal sump (21) forming.

6. An arrangement according to any of Claims 2 to 5, characterised in that a plasma burner (14) is arranged in the central axis (15) of the melting vessel (1, 2, 6), which cooperates with a bottom electrode (17).

7. An arrangement according to any of Claims 2 to 6, characterised in that the charging lances (23) are designed as jacket nozzles, the interior (26) of each jacket nozzle being destined to supply ore particles (25) and the annular space (27) of each jacket nozzle, surrounding the interior (26) being destined to supply reduction gaz.

8. An arrangement according to any of Claims 2 to 7, characterised in that, in the lid (2) of the melting vessel, several charging openings (29) are additionally arranged along a side-wall-near ring (30).

## Revendications

1. Procédé pour la réduction de minerais (25) à particules fines contenant des oxydes, dans lequel les particules de minerai contenant des oxydes sont fondues et réduites en présence de supports carbonés solides, liquides ou gazeux sous l'action d'un jet de plasma (16) d'un chalumeau au plasma (14) dans un creuset (1, 2, 6) présentant une symétrie de rotation, caractérisé en ce qu'au moins une partie des particules de minerai contenant des oxydes à réduire est introduite par des ouvertures de chargement (23) disposées dans la paroi latérale (12) du creuset et se déplace dans un mouvement de rotation cyclonique; et en ce que le jet de plasma (16) du chalumeau au plasma (14) est produit à l'intérieur, de préférence au centre du courant de particules en rotation.

2. Dispositif pour l'exécution du procédé selon la revendication, comportant un creuset (1, 2, 6) à revêtement réfractaire, présentant un espace interne (13) en symétrie de rotation et présentant des ouvertures de chargement (23) pour l'addition de particules de minerais contenant des oxydes ainsi que pour des matériaux d'addition et dessou-vertures pour des supports carbonés solides, liquides ou gazeux et autres matériaux d'addition, ainsi que comportant un ou plusieurs brûleurs à plasma (14), caractérisé en ce que dans la paroi latérale (12) du creuset (1, 2, 6) sont disposées des lances de chargement (23) dirigées dans l'espace situé entre la paroi latérale (12) du creuset et son axe central (15).

3. Dispositif selon la revendication 2, caractérisé en ce que les lances de chargement (23) sont en outre dirigées obliquement vers le haut.

4. Dispositif selon la revendication 2 ou 3, caractérisé en ce que les lances de chargement (23) sont à suspension par cadran.

5. Dispositif selon l'une des revendications 2 à 4, caractérisé en ce que dans la paroi latérale (12) du creuset (1, 2, 6) sont disposées en outre des lances (28) pour l'arrivée de gaz réducteurs et/ou d'oxygène, dirigés obliquement vers le bas en direction de la surface du bain de métal (21) qui apparaît.

6. Dispositif selon l'une des revendications 2 à 5, caractérisé en ce que dans l'axe central (15) du creuset (1, 2, 6) est disposé un chalumeau au plasma (14) qui collabore avec une électrode de plancher (17).

7. Dispositif selon l'une des revendications 2 à 6, caractérisé en ce que les lances de chargement (23) sont conçues sous forme de buses à double enveloppe, étant précisé que l'espace interne (26) de chaque buse à double enveloppe est prévu pour l'arrivée de particules de minerai (25) et que l'espace annulaire (27) qui entoure l'espace interne (26) de chaque buse à double enveloppe est prévu pour l'arrivée de gaz réducteur.

8. Dispositif selon l'une des revendications 2 à 7, caractérisé en ce que dans le couvercle (2) du creuset sont en outre disposées plusieurs ouvertures de chargement (29) le long d'une couronne (30) proche de la paroi latérale.

FIG.2

FIG.1

FIG.3

FIG.4

FIG.6

FIG.5